# FASCICULE DE BREVET EUROPEEN

(11) **EP 2 953 851 B1**
(45) Date de publication et mention de la délivrance du brevet: **04.01.2017**
(21) Numéro de dépôt: 14702856.7
(22) Date de dépôt: 05.02.2014
(51) Int. Cl.: B60N 2/427, B60N 2/42, B64D 11/06

(54) **SIEGE DE VEHICULE COMPORTANT UNE ZONE DEFORMABLE EN CAS DE CHOC**
FAHRZEUGSITZ MIT EINEM BEI EINEM AUFPRALL VERFORMBAREN BEREICH
VEHICLE SEAT COMPRISING AN AREA THAT IS DEFORMABLE IN THE EVENT OF AN IMPACT

(30) Priorité: 07.02.2013 FR 1351063
(43) Date de publication de la demande: 16.12.2015
(73) Titulaire: Expliseat, 75006 Paris (FR)
(72) Inventeur: SAADA, Benjamin, Jacob, F-75002 Paris (FR); SAMUELIAN, Jean-Charles, Marcel, F-75005 Paris (FR); TEJEDOR, Vincent, 92130 Issy les Moulineaux (FR)
(74) Mandataire: Brevalex
(86) Numéro de dépôt international: PCT/EP2014/052249
(87) Numéro de publication internationale: WO 2014/122173

(56) Documents cités:
- EP-A1- 0 581 592
- EP-A1- 0 945 302
- EP-A2- 1 752 573
- WO-A1-2008/143249
- US-A- 3 011 826

## Description

### DOMAINE TECHNIQUE

La présente invention s'applique au domaine des transports de passagers, entre autres collectifs, notamment par la route, le rail ou l'air. Elle concerne plus particulièrement le domaine des sièges de passagers.

L'invention se rapporte ainsi à un siège de véhicule pour un passager, un véhicule comportant un tel siège, ainsi qu'à un ensemble d'au moins deux sièges de véhicule adjacents et un procédé de fabrication associé.

### ÉTAT DE LA TECHNIQUE ANTÉRIEURE

Le volume et le poids des sièges sont des préoccupations auxquelles on cherche à répondre pour diminuer l'empreinte environnementale du transport, en particulier dans les moyens de transport collectifs. La diminution du volume et du poids des sièges ne doit cependant pas avoir d'impact sur la sécurité des passagers.

Dans le transport aérien en particulier, la réduction du volume et du poids des sièges est exacerbée par l'énergie nécessaire pour un vol donné. La sécurité étant un élément incontournable, les stratégies d'allègement doivent se faire sans compromettre la résistance du siège. En réduisant le volume unitaire des sièges, il est possible de diminuer l'espacement entre deux rangées de sièges successives et d'augmenter le nombre de passagers pouvant prendre place au sein des aéronefs ou, à l'inverse, d'augmenter l'espace dévolu à chaque passager. Un meilleur remplissage de l'aéronef permet, à flux de passagers constant sur une ligne aérienne, de diminuer le nombre de vols. De même, la réduction du poids unitaire des sièges limite l'énergie nécessaire pour un vol donné et le carburant nécessaire pour ces vols s'en trouve économisé, ce qui réduit d'autant les rejets de gaz à effet de serre.

Les sièges classiques de véhicule, notamment pour aéronef, intègrent des plaques rigides au niveau du dossier afin de garantir le confort du passager du siège, et de limiter la propagation des chocs subis à l'arrière du dossier. Dans un moyen de transport collectif, ces chocs peuvent être liés au passager situé derrière le siège : les genoux de ce dernier peuvent par exemple taper dans l'arrière du dossier, et peuvent gêner le passager assis sur le siège considéré.

A titre d'exemple, la demande de brevet WO 2012/052823 A2 divulgue un dossier de siège avancé, où une première plaque rigide permet de supporter la mousse pour le passager assis sur le siège considéré, et où une seconde plaque rigide permet d'arrêter les genoux du passager situé à l'arrière du siège. La double couche rigide ainsi formée permet d'éviter partiellement la propagation des chocs vers le passager assis sur le siège considéré. Les deux plaques rigides étant cependant fixées sur le même support, les ondes de chocs peuvent se propager de la face arrière vers la face avant du dossier via les fixations des plaques rigides.

La demande de brevet JP 2011-084227 A divulgue en outre un dossier pour un siège de véhicule affiné, où à nouveau une plaque rigide est insérée au sein du dossier, derrière une couche textile. Cette plaque est à nouveau fixée à la même structure que la partie avant du dossier du siège, induisant comme décrit précédemment une propagation des chocs de la face arrière vers la face avant du dossier.

En outre, on connaît le document EP 0 581 592 A1, qui est considéré comme l'art antérieur le plus proche et décrit les caractéristiques du préambule de la revendication 1.

Par ailleurs, en cas de choc, l'utilisation d'un coussin gonflable (ou « airbag » en anglais) peut permettre d'amortir les genoux d'un passager situé à l'arrière d'un siège considéré. La demande de brevet KR 2012-0040539 A divulgue par exemple un coussin gonflable situé à l'arrière d'un siège pour amortir le passager de derrière le siège considéré. De même, la demande de brevet EP 2 445 763 A2 décrit l'utilisation d'un dispositif actif de gonflement pour amortir les genoux d'un passager en cas d'accident.

Enfin, la demande de brevet EP 2414 234 A2 divulgue un siège dont la structure est agglomérée dans une mousse absorbante. La stratégie d'isolation entre les faces arrière et avant du dossier du siège réside ici dans l'utilisation d'une mousse déformable et absorbante. Cette stratégie conduit à un dossier assez lourd, et limite la propagation de petits chocs sans pour autant empêcher les chocs atteignant la structure support de se propager.

### EXPOSÉ DE L'INVENTION

L'invention a pour but de remédier au moins partiellement aux besoins mentionnés ci-dessus et aux inconvénients relatifs aux réalisations de l'art antérieur.

L'invention vise notamment à permettre l'amortissement de chocs subis par un siège de véhicule pour un passager, notamment des chocs subis sur l'arrière du dossier du siège, tout en empêchant simultanément la propagation de tels chocs vers le passager du siège, notamment sur l'avant du dossier du siège.

Ainsi, l'invention se propose de concevoir un système d'isolation efficace des parties avant et arrière d'un siège, notamment des faces avant et arrière du dossier du siège, sans surcroît de masse.

L'invention a également pour but de proposer un siège pourvu d'une assise et/ou d'un dossier fins et légers, empêchant la transmission vers le passager du siège des chocs subis à l'arrière et/ou sous le siège.

En particulier, la présente invention a été conçue dans l'esprit des problématiques citées précédemment, à savoir : réduction du poids et du volume unitaire des sièges, garantie de la sécurité des passagers, accroissement du confort.

L'invention a ainsi pour objet, selon l'un de ses aspects, un siège de véhicule pour un passager selon la revendication 1.

L'espace de débattement peut permettre le débattement de la face arrière du dossier vers la face avant du dossier et/ou le débattement de la face inférieure de l'assise vers la face supérieure de l'assise.

Grâce à l'invention, il peut être possible d'amortir les chocs subis par le siège, notamment les chocs subis sur la face arrière du dossier et/ou sur la face inférieure de l'assise, tout en empêchant, ou du moins en limitant, la transmission de ces chocs vers le passager, en particulier vers la face avant du dossier et/ou vers la face supérieure de l'assise. Le choc peut, par exemple, être provoqué par le contact d'un genou, d'un coude ou d'un pied. L'invention peut ainsi permettre par exemple que des coups donnés par le passager situé sur le siège de derrière le siège considéré, notamment des coups de genoux sur la face arrière du dossier et/ou des coups de pieds sur la face inférieure de l'assise, ne soient ressentis par le passager assis sur le siège considéré. L'invention peut de ce fait permettre de disposer d'un système d'isolation des parties arrière et avant du siège, notamment des faces arrière et avant du dossier du siège et/ou des faces inférieure et supérieure de l'assise du siège, en utilisant un principe de déformation de surface et d'espacement entre les parties arrière et avant du siège, notamment entre les faces arrière et avant du dossier du siège et/ou les faces inférieure et supérieure de l'assise du siège. Aussi, l'invention peut de façon générale permettre une économie de poids par rapport à un système conventionnel, une simplification de la pose et du recyclage, et une amélioration de la sécurité du passager. Elle est particulièrement avantageuse pour le transport collectif de passagers, notamment par la route, le rail ou l'air.

Le siège selon l'invention peut en outre comporter l'une ou plusieurs des caractéristiques suivantes prises isolément ou suivant toutes combinaisons techniques possibles.

Ladite au moins une zone déformable peut être configurée pour se déformer, lors d'un choc subi sur la face arrière du dossier et/ou la face inférieure de l'assise, dans l'espace de débattement sans entrer au contact respectivement de la face avant du dossier et/ou la face supérieure de l'assise.

Ladite au moins une zone déformable peut être apte à se déformer, lors du choc, dans l'espace de débattement, vers la face avant du dossier et/ou la face supérieure de l'assise, tant que l'arrimage de la face arrière du dossier et/ou de la face inférieure de l'assise, comportant ladite au moins une zone déformable, à la structure fixe du siège ou de l'habitacle du véhicule garantit une séparation entre les deux faces avant et arrière du dossier et/ou les deux faces inférieure et supérieure de l'assise, autrement dit tant que l'espace de débattement permet l'absence de contact entre les faces avant et arrière du dossier et/ou les faces supérieure et inférieure de l'assise. En particulier, l'espace de débattement peut être configuré pour empêcher la transmission du choc depuis la face arrière du dossier, ou la face inférieure de l'assise, vers la face avant du dossier, ou respectivement la face supérieure de l'assise.

La face arrière du dossier et/ou la face inférieure de l'assise peut comporter ladite au moins une zone déformable dans au moins une zone prédéterminée, notamment une zone susceptible de subir un choc, par exemple au lieu probable d'impact sur le dossier des genoux du passager situé à l'arrière du siège considéré et/ou au lieu probable d'impact sur l'assise des pieds du passager situé à l'arrière du siège considéré.

La face arrière du dossier et/ou la face inférieure de l'assise peuvent comporter au moins une zone non déformable en dehors de ladite au moins une zone déformable, ladite au moins une zone non déformable (rigide) étant par exemple réalisée à l'aide d'un matériau plastique ou métallique.

La face arrière du dossier et/ou la face inférieure de l'assise comportant ladite au moins une zone déformable peut comporter une structure textile tressée et/ou tissée et/ou tricotée présentant au moins deux zones ayant des résistances à l'enfoncement différentes, l'une au moins de ces zones formant ladite au moins une zone déformable, notamment une zone de résistance à l'enfoncement la plus élevée.

La face arrière du dossier et/ou la face inférieure de l'assise comportant ladite au moins une zone déformable comporte une structure textile tissée et/ou tricotée présentant un tressage et/ou tissage et/ou tricotage uniforme, ladite au moins une zone déformable étant obtenue par le biais d'une configuration géométrique différente de la structure fixe du siège par rapport à la configuration géométrique de la zone déformable avant sa fixation sur la structure fixe.

Ladite au moins une zone déformable peut s'étendre sur au moins un évidement de la structure fixe du siège, l'épaisseur de la structure fixe définissant l'espace de débattement, la structure fixe étant réalisée en un matériau rigide, notamment en matériau composite et/ou plastique et/ou métallique.

La face arrière du dossier et/ou la face inférieure de l'assise comportant ladite au moins une zone déformable peut être fixée à la structure fixe du siège au moyen d'au moins une accroche réversible, notamment un bouton pression, une fermeture éclair, une bande auto-aggripante, un vissage et/ou un boulonnage.

En variante, la face arrière du dossier et/ou la face inférieure de l'assise comportant ladite au moins une zone déformable peut être fixée à la structure fixe du siège au moyen d'au moins une accroche irréversible, notamment par collage, soudure, couture et/ou rivetage.

L'espace de débattement peut être vide. En variante, l'espace de débattement peut être rempli d'un matériau déformable élastiquement, notamment une mousse.

L'invention a encore pour objet, selon un autre de ses aspects, un ensemble d'au moins deux sièges de véhicule adjacents, caractérisé en ce qu'il comporte au moins deux sièges adjacents tels que définis précédemment, et en ce qu'au moins une même zone déformable est commune auxdits au moins deux sièges, s'étendant notamment sur les faces arrières des dossiers desdits au moins deux sièges et/ou sur les faces inférieures des assises desdits au moins deux sièges.

L'invention a encore pour objet, selon un autre de ses aspects, un véhicule comportant un siège tel que défini précédemment ou un ensemble d'au moins deux sièges de véhicule tel que défini précédemment.

Par « véhicule », on entend tout moyen de transport ou de déplacement d'au moins un passager, par exemple un avion, une voiture, un train, une poussette, une cabine de téléphérique, un télésiège, un bateau, une nacelle d'une attraction à sensations fortes, entre autres.

La face arrière du dossier et/ou la face inférieure de l'assise comportant ladite au moins une zone déformable peut être arrimée à une structure fixe d'au moins un siège.

La face arrière du dossier et/ou la face inférieure de l'assise comportant ladite au moins une zone déformable peut encore être arrimée à une structure fixe de l'habitacle du véhicule.

L'invention a encore pour objet, selon un autre de ses aspects, un procédé de fabrication d'un siège de véhicule tel que défini précédemment, dans lequel on assemble une structure textile tressée et/ou tissée et/ou tricotée, destinée à former au moins partiellement la face arrière du dossier et/ou la face inférieure de l'assise comportant ladite au moins une zone déformable, sur une structure fixe du siège.

Le siège et le procédé selon l'invention peuvent comporter l'une quelconque des caractéristiques précédemment énoncées, prises isolément ou selon toutes combinaisons techniquement possibles avec d'autres caractéristiques.

### BRÈVE DESCRIPTION DES DESSINS

L'invention pourra être mieux comprise à la lecture de la description détaillée qui va suivre, d'exemples de mise en oeuvre non limitatifs de celle-ci, ainsi qu'à l'examen des figures, schématiques et partielles, du dessin annexé, sur lequel :
- les figures 1A et 1B sont des vues en perspective, respectivement éclatée et assemblée, d'un siège conforme à l'invention,
- la figure 2 est une vue partielle et en perspective des faces avant et arrière du dossier d'un siège conforme à l'invention, avant un choc subi sur la face arrière du dossier,
- la figure 3 est une vue partielle et en perspective des faces avant et arrière du dossier de la figure 2, pendant le choc subi sur la face arrière du dossier,
- la figure 4 est une vue arrière d'un dossier d'un siège conforme à l'invention présentant une face arrière avec une structure textile avec des zones de résistance à l'enfoncement différentes, et
- les figures 5A, 5B et 5C montrent une manière de réaliser le dossier du siège conforme à l'invention,
- la figure 6 montre une variante de réalisation du siège conforme à l'invention,
- les figures 7A et 7B montrent un premier procédé de fixation du textile formant le dossier du siège conforme à l'invention, et
- la figure 8 montre un second procédé de fixation du textile formant le dossier du siège conforme à l'invention.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

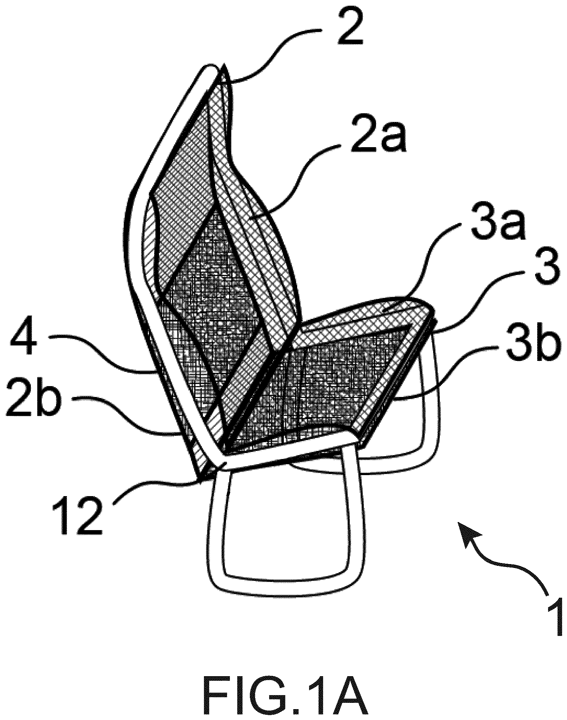

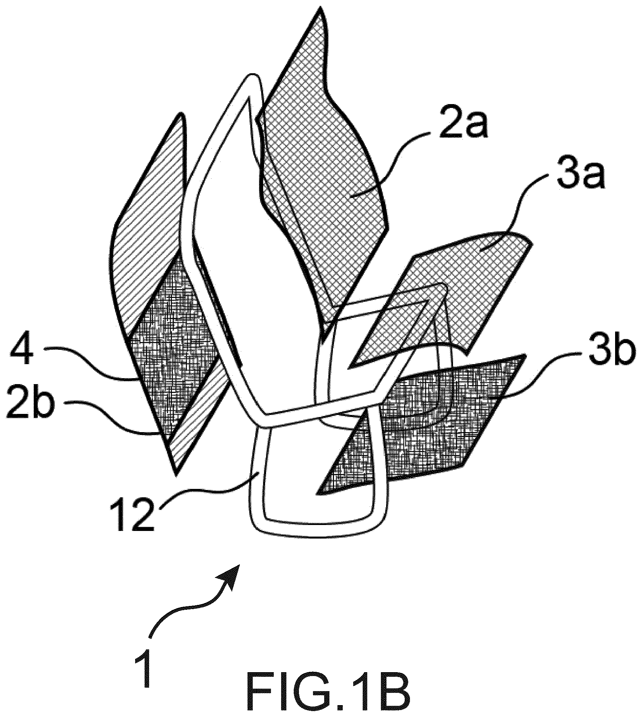

Il va être décrit ci-après, en référence aux figures 1 à 8, des exemples de mise en oeuvre de l'invention.

Les figures 1A et 1B représentent, en perspective, respectivement en vue éclatée et assemblée, un exemple de siège 1 de véhicule adjacents pour passagers selon l'invention.

Le siège 1 de véhicule comporte un dossier 2 présentant une face avant 2a dirigée vers le passager assis sur le siège 1 et une face arrière 2b opposée à la face avant 2a, ainsi qu'une assise 3 présentant une face supérieure 3a dirigée vers le passager assis sur le siège 1 et une face inférieure 3b opposée à la face supérieure 3a.

Conformément à l'invention, la face arrière 2b du dossier 2 du siège 1 comporte une zone déformable 4 lors d'un choc vers la face avant 2a du dossier 2. Un tel choc peut par exemple correspondre à des coups de genoux donnés par un passager assis sur le siège à l'arrière du siège 1 considéré.

Plus spécifiquement, une zone déformable 4s'étend sur la face arrière 2b du dossier 2.

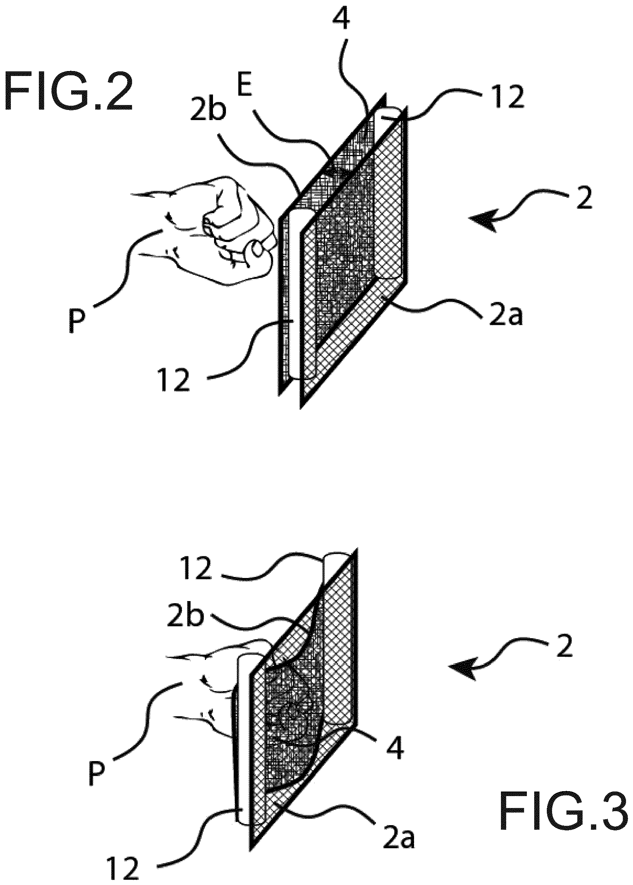

En référence aux figures 2 et 3, afin d'absorber le ou les chocs subis sur le dossier 3 et afin de ne pas impacter le confort des passagers assis sur le siège 1, la zone déformable 4 est avantageusement configurée pour se déformer dans les espaces de débattement E, chaque espace de débattement E étant défini par la distance séparant la zone déformable 4 sur la face arrière 2b du dossier 2 et la face avant 2a du dossier 2. Dans le cas d'un ensemble de plusieurs sièges adjacents, on compte autant d'espaces de débattement E, à savoir un pour chaque siège 1 de véhicule. Chaque espace de débattement E est défini ou délimité par la structure fixe 12 de chaque siège 1, et par la face avant 2a du dossier 2 du siège 1 et la zone déformable 4.

La déformation de la zone déformable 4, lors d'un choc, se fait sans propagation du choc vers les faces avant 2a du dossier 2. Plus particulièrement, la zone déformable 4 est configurée pour se déformer, lors du choc, dans les espaces de débattement E sans entrer au contact des faces avant 2a des dossiers 2.

De la sorte, l'invention peut permettre d'avoir une zone déformable 4 sur la face arrière 2b du dossier 2 qui soit suffisamment déformable (suffisamment souple) pour amortir le choc et permettre le confort du passager situé derrière le siège 1 considéré, par exemple pour permettre un confort au niveau des genoux, mais également prévue pour empêcher la propagation du choc vers la face avant 2a du dossier 2 et préserver ainsi le confort du passager assis sur le siège 1. La zone déformable 4 peut ainsi être à la fois suffisamment souple pour l'amortissement du choc et suffisamment rigide pour ne pas se déformer dans l'espace de débattement E jusqu'à entrer en contact avec la face avant 2a du dossier 2.

L'espace de débattement E peut être vide, c'est-à-dire qu'aucun élément n'est inséré entre la face arrière 2b et la face avant 2a du dossier 2. En variante, l'espace de débattement E peut être rempli par un matériau déformable élastiquement, par exemple une mousse.

La face arrière 2b du dossier 2, et notamment la zone déformable 4, peuvent être arrimées à la structure fixe 12 du siège 1. En variante, les faces arrières 2b du dossier 2, et notamment la zone déformable 4, peuvent être arrimées à l'habitacle du véhicule comportant un ensemble de plusieurs sièges 1 adjacents.

L'arrimage peut être réalisé par exemple au moyen d'une accroche réversible, par exemple un bouton pression, une fermeture éclair, une bande auto-agrippante, un vissage, un boulonnage, entre autres. En variante, l'arrimage peut être réalisé au moyen d'une accroche irréversible, par exemple par collage, par soudure, par couture, par rivetage, entre autres.

Les figures 2 et 3 illustrent respectivement, en perspective et partiellement, un dossier 2 de siège 1 avant un choc subi sur la face arrière 2b du dossier 2 et pendant un choc subi sur la face arrière 2b du dossier 2.

Le choc peut par exemple correspondre à un coup de poing donné par le poignet P d'un passager situé derrière le dossier 2.

La structure fixe 12 du siège 1, plus particulièrement du dossier 2, peut par exemple comporter un évidement, comme illustré par l'espace formé entres les montants de la structure fixe 12, lequel définit l'espace de débattement E pour la zone déformable 4, qui s'étend, dans cet exemple, sur la totalité de la face arrière 2b du dossier 2 représentée.

La structure fixe 12 peut être réalisée en un matériau rigide, par exemple en plastique et/ou composite et/ou en métal.

Avant le choc, comme illustré sur la figure 2, la zone déformable 4 de la face arrière 2b du dossier 2 est à distance de la face avant 2a du dossier 2, cette distance formant l'espace de débattement E. La fonction de la zone déformable 4 est d'absorber le choc exercé sur la face arrière 2b du dossier 2 par déformation élastique, sans le transmettre à la face avant 2a du dossier 2 et au passager assis sur le siège 1.

Ainsi, lors du choc, comme illustré sur la figure 3, la zone déformable 4 se déforme sous l'impact à l'intérieur de la zone de débattement E pour occuper l'espace de la zone de débattement E, sans toutefois entrer au contact de la face avant 2a du dossier 2 garantissant la non propagation du choc vers le passager assis sur le siège 1.

En cas de présence d'un matériau déformable élastiquement dans l'espace de débattement E, par exemple une mousse, celui-ci se déforme également sous l'impact, et atténue la force subie en retour par le poignet à l'origine de l'impact.

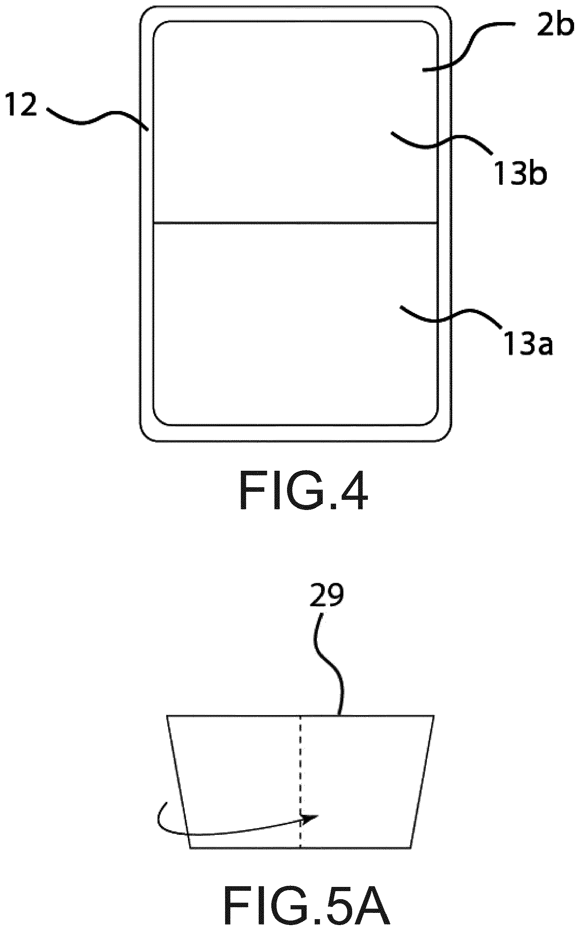

La figure 4 représente la face arrière d'un siège 1 selon l'invention réalisé par une première étape de fabrication du siège 1.

Dans cet exemple, on assemble une structure textile tressée et/ou tissée et/ou tricotée 11, qui forme la face arrière 2b du dossier, sur la structure fixe 12 du siège 1. La structure textile 11 présente avantageusement deux zones 13a et 13b qui ont des résistances à l'enfoncement différentes. Plus particulièrement, la zone 13a présente une résistance à l'enfoncement plus élevée que celle de la zone 13b.

Cette différence de résistance à l'enfoncement peut permettre de définir une zone déformable 4. En particulier, la zone 13a de densité plus élevée peut correspondre à la zone déformable 4, étant de la sorte suffisamment souple pour amortir un choc mais aussi suffisamment rigide pour empêcher la transmission du choc vers la face avant 2a du dossier.

Ainsi, la structure textile 12 peut présenter une résistance à l'enfoncement ou tension plus élevée dans la zone inférieure de la face arrière 2b du dossier 2 que dans la zone supérieure de la face arrière 2b du dossier 2.

L'utilisation de fils différents, de fils en matériaux différents, de tressage ou de tricotage ou tissage différents constituent différents procédés pour obtenir différentes résistances à l'enfoncement pour le textile utilisé.

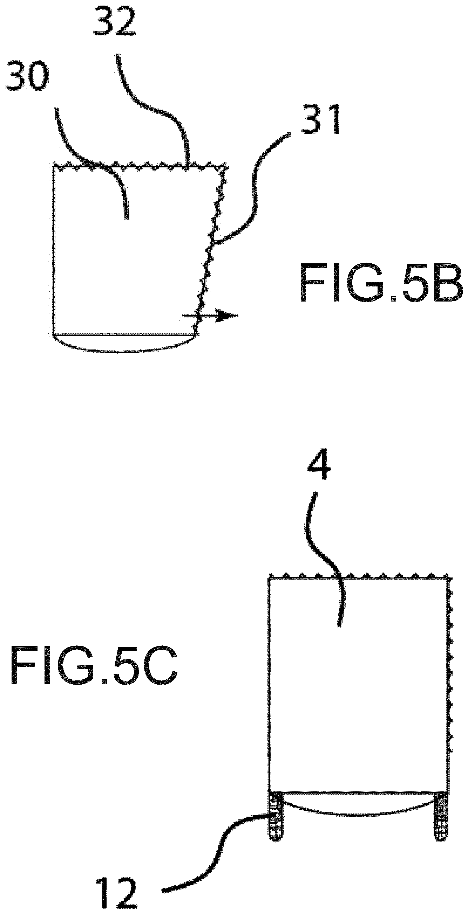

Les figures 5A à 5C détaillent un mode de réalisation d'une face arrière de dossier possédant une surface textile 30 de tension variable. Une partie textile 29 déformable est découpée sous forme de trapèze, la partie la plus étroite correspondant à celle qui sera *in fine* la plus tendue. La découpe est calculée en sorte que la partie étroite donne un textile particulièrement tendu, tandis que la partie large correspond à une surface plus facilement déformable. Après repliement du trapèze sur lui-même, une couture 31 est effectuée sur le côté en biais du trapèze ainsi formé. Une seconde couture 32 peut également être réalisée sur la partie haute du trapèze, en sorte de réaliser une chaussette pouvant être glissée sur une structure rigide 12. La dernière étape consiste à exercer une force sur le coin le plus intérieur du trapèze pour forcer la zone déformable 4 à venir épouser les formes de la structure rigide 12. Ce faisant, une tension est induite sur la partie basse de la zone déformable 4. Cette tension est conservée tant que la structure rigide 12 ne se déforme pas.

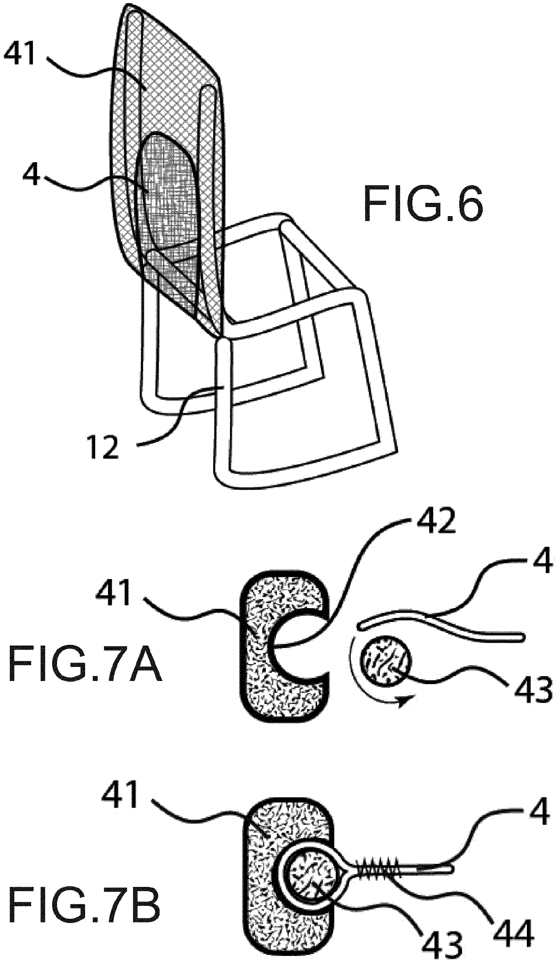

La figure 6 détaille un mode alternatif d'intégration de la surface déformable au sein d'une face arrière de dossier. Une coque 41 métallique, composite ou plastique permet de former la face arrière du dossier de siège. Au sein de cette coque 41 rigide, un évidemment est pratiqué pour y insérer une zone déformable 4. La coque 41 est arrimée sur la structure de siège 12 : lorsque que la zone déformable 4 subit un choc, elle peut se déformer et transmettre une force marginale, égale à la force initiale moins la force nécessaire à la déformation de la zone déformable 40, à la coque 41 ou directement à la structure de siège 12.

Les figures 7A et 7B détaillent un mode de fixation de la zone déformable 4, en l'occurrence textile, sur uns e coque rigide. La coque rigide 41 possède une rainure 42 à section circulaire dont l'ouverture angulaire libre est inférieure strictement à 180°, idéalement de l'ordre de 120°. Le textile formant la zone déformable 4 est monté autour d'un cylindre rigide 43, par exemple en matière plastique, sur toute la longueur de la rainure 42 de la coque rigide 41. Une couture 44 de la zone déformable 4 sur elle-même permet d'emprisonner le cylindre rigide 43. Ce cylindre rigide 43 est ensuite inséré dans la rainure 42 à section circulaire de la coque rigide 41.

Ce mode de fixation peut être transposé au cas d'une zone déformable seule : un rail est alors fixé sur la structure rigide 42 du dossier, et l'insert cousu, collé ou arrimé au niveau de la zone déformable y est inséré.

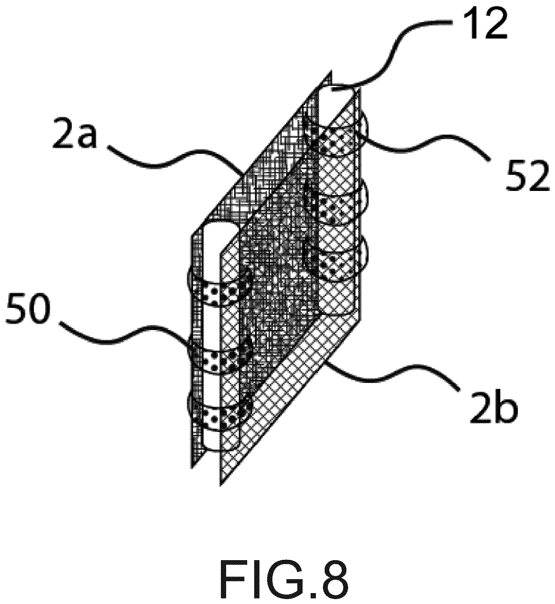

La figure 8 détaille un dernier mode de fixation utilisant des anneaux rigides 50. Ces anneaux enserrent la structure rigide 12 du dossier, et permettent de relier la face arrière 26 du dossier 2 et la face avant 2a sans transfert de force direct. Quand l'une des deux faces est soumise à une tension, la force résultante est transmise directement à la structure 12 du dossier 2 par l'anneau 50, sans influence sur l'autre face. Cette construction permet une excellente séparation des deux faces. Les anneaux doivent être aménagés pour empêcher la rotation des faces autour de la structure rigide 12 et donc en direction de l'espace de débattement E séparant la face arrière de la face avant du dossier. Pour ce faire une surépaisseur 52 peut être construite sur l'anneau 50 au niveau de l'espace de débattement E. Les faces avant et arrière doivent avoir des fentes permettant l'insertion de l'anneau 50. Ces fentes doivent être suffisamment grandes pour que l'anneau 50 puisse être inséré, mais suffisamment petites pour que le textile ne puisse coulisser au niveau de la surépaisseur 52 de l'anneau 50. Ces fentes sont des points de faiblesse des faces avant et arrière et doivent par conséquent être renforcées, soit au moyen de surfilage, soit en ajoutant un second composant pour rigidifier la fente (autre matière textile plus rigide, composite, découpe métallique ou plastique par exemple).

Bien entendu, l'invention n'est pas limitée aux exemples de réalisation qui viennent d'être décrits. Diverses modifications peuvent y être apportées par l'homme du métier.

En particulier, la ou les zones déformables 4 pourraient être situées également, voire uniquement, sur la ou les assises 3 des sièges 1 décrits précédemment, plus précisément sur la ou les faces inférieures 3b de la ou des assises 3, notamment pour prévenir des chocs subis dans les assises, par exemple des coups de pieds de passagers situés à l'arrière.

L'expression « comportant un » doit être comprise comme étant synonyme de « comportant au moins un », sauf si le contraire est spécifié.

## Revendications

1. Siège (1) de véhicule pour un passager, comportant :
- un dossier (2) présentant une face avant (2a) dirigée vers le passager et une face arrière (2b) opposée à la face avant (2a), et
- une assise (3) présentant une face supérieure (3a) dirigée vers le passager et une face inférieure (3b) opposée à la face supérieure (3a),
la face arrière (2b) du dossier (2) et/ou la face inférieure (3b) de l'assise (3) comportant au moins une zone déformable (4) lors d'un choc, respectivement vers la face avant (2a) du dossier (2) et/ou vers la face supérieure (3a) de l'assise (3),
les faces avant (2a) et arrière (2b) du dossier (2), et/ou les faces supérieure (3a) et inférieure (3b) de l'assise (3), étant situées à distance l'une de l'autre, au moins au niveau de ladite au moins une zone déformable (2), pour définir un espace de débattement (E), ladite au moins une zone déformable (4) de la face arrière (2b) du dossier (2) et/ou de la face inférieure (3b) de l'assise (3) étant configurée pour se déformer, lors d'un choc subi sur la face arrière (2b) du dossier (2) et/ou la face inférieure (3b) de l'assise (3), dans l'espace de débattement (E) sans propagation du choc, respectivement dans la face avant (2a) du dossier (2) et/ou la face supérieure (3a) de l'assise (3),
**caractérisé en ce que** la face arrière (2b) du dossier (2) et/ou la face inférieure (3b) de l'assise (3) comportant ladite au moins une zone déformable (4) comporte une structure textile tressée et/ou tissée et/ou tricotée (11) présentant un tressage et/ou tissage et/ou tricotage uniforme, ladite au moins une zone déformable (4) étant obtenue par le biais d'une configuration géométrique différente de la structure fixe (12) du siège (1) par rapport à la configuration géométrique de la zone déformable (30) avant sa fixation sur la structure fixe (12).

2. Siège selon la revendication 1, **caractérisé en ce que** ladite au moins une zone déformable (4) est configurée pour se déformer, lors d'un choc subi sur la face arrière (2b) du dossier (2) et/ou la face inférieure (3b) de l'assise (3), dans l'espace de débattement (E) sans entrer au contact respectivement de la face avant (2a) du dossier (2) et/ou la face supérieure (3a) de l'assise (3).

3. Siège selon la revendication 1 ou 2, **caractérisé en ce que** la face arrière (2b) du dossier (2) et/ou la face inférieure (3b) de l'assise (3) comportant ladite au moins une zone déformable (4) comporte une structure textile tressée et/ou tissée et/ou tricotée (11) présentant au moins deux zones (13a, 13b) ayant des résistances à l'enfoncement différentes.

4. Siège selon l'une quelconque des revendications précédentes, **caractérisé en ce que** ladite au moins une zone déformable (4) s'étend sur au moins un évidement de la structure fixe (12) du siège (1), notamment un évidement pratiqué dans une coque (41) de la structure fixe (12), l'épaisseur de la structure fixe (12) définissant l'espace de débattement (E), la structure fixe (2), notamment la coque (41) étant réalisée en un matériau rigide, notamment en composite et/ou plastique et/ou en métal.

5. Siège selon l'une quelconque des revendications précédentes, **caractérisé en ce que** la face arrière (2b) du dossier (2) et/ou la face inférieure (3b) de l'assise (3) comportant ladite au moins une zone déformable (4) est fixée à la structure fixe (12) du siège (1) au moyen d'au moins une accroche réversible, notamment un bouton pression, une fermeture éclair, une bande auto-aggripante, un vissage et/ou un boulonnage.

6. Siège selon l'une quelconque des revendications 1 à 4, **caractérisé en ce que** la face arrière (2b) du dossier (2) et/ou la face inférieure (3b) de l'assise (3) comportant ladite au moins une zone déformable (4) est fixée à la structure fixe (12) du siège (1) au moyen d'au moins une accroche irréversible, notamment par collage, soudure, couture et/ou rivetage.

7. Siège selon l'une quelconque des revendications précédentes, **caractérisé en ce que** l'espace de débattement (E) est vide.

8. Siège selon l'une quelconque des revendications 1 à 6, **caractérisé en ce que** l'espace de débattement (E) est rempli d'un matériau déformable élastiquement, notamment une mousse.

9. Ensemble d'au moins deux sièges (1) de véhicule adjacents, **caractérisé en ce qu'**il comporte au moins deux sièges (1) adjacents selon l'une quelconque des revendications précédentes, et **en ce qu'**au moins une même zone déformable (4) est commune auxdits au moins deux sièges (1), s'étendant notamment sur les faces arrières des dossiers desdits au moins deux sièges (1) et/ou sur les faces inférieures des assises desdits au moins deux sièges (1).

10. Véhicule comportant un siège (1) selon l'une quelconque des revendications 1 à 8 ou un ensemble (10) d'au moins deux sièges (1) de véhicule selon la revendication 9.

11. Véhicule selon la revendication 10, **caractérisé en ce que** la face arrière (2b) du dossier (2) et/ou la face inférieure (3b) de l'assise (3) comportant ladite au moins une zone déformable (4) est arrimée à une structure fixe (12) d'au moins un siège (1).

12. Véhicule selon la revendication 10, **caractérisé en ce que** la face arrière (2b) du dossier (2) et/ou la face inférieure (3b) de l'assise (3) comportant ladite au moins une zone déformable (4) est arrimée à une structure fixe de l'habitacle du véhicule.

13. Procédé de fabrication d'un siège (1) de véhicule selon l'une quelconque des revendications 1 à 8, dans lequel on assemble une structure textile tressée et/ou tissée et/ou tricotée (11), destinée à former au moins partiellement la face arrière (2b) du dossier (2) et/ou la face inférieure (3b) de l'assise (3) comportant ladite au moins une zone déformable (4), sur une structure fixe (12) du siège (1).

## Patentansprüche

1. Fahrzeugsitz (1) für einen Insassen, enthaltend:
- eine Rückenlehne (2), die eine zum Insassen gerichtete Vorderseite (2a) und eine der Vorderseite (2a) entgegengesetzte Rückseite (2b) aufweist, und
- eine Sitzfläche (3), die eine zum Insassen gerichtete Oberseite (3a) und eine der Oberseite (3a) entgegengesetzte Unterseite (3b) aufweist,
wobei die Rückseite (2b) der Rückenlehne (2) und/oder die Unterseite (3b) der Sitzfläche (3) zumindest einen Bereich (4) enthält, der bei einem Stoß zur Vorderseite (2a) der Rückenlehne (2) hin und/oder zur Oberseite (3a) der Sitzfläche (3) hin verformbar ist,
wobei die Vorder- (2a) und die Rückseite (2b) der Rückenlehne (2) und/oder die Oberseite (3a) und die Unterseite (3b) der Sitzfläche zumindest in Höhe des zumindest einen verformbaren Bereichs (2) voneinander beabstandet liegen, um einen Auslenkungsraum (E) zu definieren,
wobei der zumindest eine verformbare Bereich (4) der Rückseite (2b) der Rückenlehne (2) und/oder der Unterseite (3b) der Sitzfläche (3) dazu ausgelegt ist, sich bei einem auf die Rückseite (2b) der Rückenlehne (2) und/oder der Unterseite (3b) der Sitzfläche (3) erfolgten Stoß in dem Auslenkungsraum (E) ohne Ausbreitung des Stoßes in die Vorderseite (2a) der Rückenlehne (2) und/oder in die Oberseite (3a) der Sitzfläche (3) zu verformen,
**dadurch gekennzeichnet, dass** die Rückseite (2b) der Rückenlehne (2) und/oder die Unterseite (3b) der Sitzfläche (3) mit dem zumindest einen verformbaren Bereich (4) eine geflochtene und/oder gewebte und/oder gestrickte Textilstruktur (11) enthält, die ein einheitliches Geflecht und/oder Gewebe und/oder Gestrick aufweist, wobei der zumindest eine verformbare Bereich (4) über eine geometrische Konfiguration erhalten wird, die sich von der festen Struktur (12) des Sitzes (1) gegenüber der geometrischen Konfiguration des verformbaren Bereichs (30) vor dessen Befestigung an die feste Struktur (12) unterscheidet.

2. Sitz nach Anspruch 1, **dadurch gekennzeichnet, dass** der zumindest eine verformbare Bereich (4) dazu ausgelegt ist, sich bei einem auf der Rückseite (2b) der Rückenlehne (2) und/oder der Unterseite (3b) der Sitzfläche (3) erfolgten Stoß in dem Auslenkungsraum (E) zu verformen, ohne mit der Vorderseite (2a) der Rückenlehne (2) und/oder der Oberseite (3a) der Sitzfläche (3) in Kontakt zu gelangen.

3. Sitz nach Anspruch 1 oder 2, **dadurch gekennzeichnet, dass** die Rückseite (2b) der Rückenlehne (2) und/oder die Unterseite (3b) der Sitzfläche (3), die den zumindest einen verformbaren Bereich (4) enthält, eine geflochtene und/oder gewebte und/oder gestrickte Textilstruktur (11) aufweist, die zumindest zwei Bereiche (13a, 13b) aufweist, die unterschiedliche Eindrückbeständigkeiten haben.

4. Sitz nach einem der vorangehenden Ansprüche, **dadurch gekennzeichnet, dass** der zumindest eine verformbare Bereich (4) sich über zumindest eine Ausnehmung der festen Struktur (12) des Sitzes (1) erstreckt, insbesondere über eine Ausnehmung, die in einer Schale (41) der festen Struktur (12) ausgeführt ist, wobei die Materialdicke der festen Struktur (12) den Auslenkungsraum (E) definiert, wobei die feste Struktur (2), insbesondere die Schale (41), aus einem starren Material hergestellt ist, insbesondere aus Verbundmaterial und/oder Kunststoff und/oder Metall.

5. Sitz nach einem der vorangehenden Ansprüche, **dadurch gekennzeichnet, dass** die Rückseite (2b) der Rückenlehne (2) und/oder die Unterseite (3b) der Sitzfläche (3), die den zumindest einen verformbaren Bereich (4) aufweist, an die feste Struktur (12) des Sitzes (1) mittels zumindest einer lösbaren Verbindung befestigt ist, insbesondere mit einem Druckknopf, einem Reißverschluss, einem Klettverschluss bzw. einer An- und/oder Verschraubung.

6. Sitz nach einem der vorangehenden Ansprüche 1 bis 4, **dadurch gekennzeichnet, dass** die Rückseite (2b) der Rückenlehne (2) und/oder die Unterseite (3b) der Sitzfläche (3), die den zumindest einen verformbaren Bereich (4) aufweist, an die feste Struktur (12) des Sitzes (1) mittels zumindest einer nicht lösbaren Verbindung befestigt ist, insbesondere durch Verkleben, Verschweißen, Vernähen und/oder Vernieten.

7. Sitz nach einem der vorangehenden Ansprüche, **dadurch gekennzeichnet, dass** der Auslenkungsraum (E) leer ist.

8. Sitz nach einem der vorangehenden Ansprüche 1 bis 6, **dadurch gekennzeichnet, dass** der Auslenkungsraum (E) mit einem elastisch verformbaren Material gefüllt ist, insbesondere mit einem Schaum.

9. Anordnung von zumindest zwei aneinandergrenzenden Fahrzeugsitzen (1), **dadurch gekennzeichnet, dass** sie zumindest zwei aneinandergrenzende Sitze (1) nach einem der vorangehenden Ansprüche aufweist, und dass zumindest ein gleicher verformbarer Bereich (4) den zumindest zwei Sitzen (1) gemein ist, der sich insbesondere über die Rückseiten der Rückenlehnen der zumindest zwei Sitze (1) und/oder über die Unterseiten der Sitzflächen der zumindest zwei Sitze (1) erstreckt.

10. Fahrzeug mit einem Sitz (1) nach einem der Ansprüche 1 bis 8 oder einer Anordnung (10) von zumindest zwei Fahrzeugsitzen (1) nach Anspruch 9.

11. Fahrzeug nach Anspruch 10, **dadurch gekennzeichnet, dass** die Rückseite (2b) der Rückenlehne (2) und/oder die Unterseite (3b) der Sitzfläche (3), die den zumindest einen verformbaren Bereich (4) aufweist, mit einer festen Struktur (12) zumindest eines Sitzes (1) verzurrt ist.

12. Fahrzeug nach Anspruch 10, **dadurch gekennzeichnet, dass** die Rückseite (2b) der Rückenlehne (2) und/oder die Unterseite (3b) der Sitzfläche (3), die den zumindest einen verformbaren Bereich (4) aufweist, mit einer festen Struktur des Fahrgastraums des Fahrzeugs verzurrt ist.

13. Verfahren zum Herstellen eines Fahrzeugsitzes (1) nach einem der Ansprüche 1 bis 8, wobei eine geflochtene und/oder gewebte und/oder gestrickte Textilstruktur (11), die dazu bestimmt ist, zumindest teilweise die Rückseite (2b) der Rückenlehne (2) und/oder die Unterseite (3b) der Sitzfläche (3) zu bilden, die den zumindest einen verformbaren Bereich (4) aufweist, an eine feste Struktur (12) des Sitzes (1) angefügt wird.

## Claims

1. Vehicle seat (1) for a passenger, comprising:
- a backrest (2) having a front face (2a) directed towards the passenger and a rear face (2b) opposite the front face (2a), and
- a seat part (3) having an upper face (3a) directed towards the passenger and a lower face (3b) opposite the upper face (3a),
the rear face (2b) of the backrest (2) and/or the lower face (3b) of the seat part (3) comprising at least one area (4) that is deformable in the event of an impact, respectively towards the front face (2a) of the backrest (2) and/or towards the upper face (3a) of the seat part (3),
the front (2a) and rear (2b) faces of the backrest (2), and/or the upper (3a) and lower (3b) faces of the seat part (3), being located at a distance from one another, at least at said at least one deformable area (2), so as to define a clearance space (E),
said at least one area (4) that is deformable of the rear face (2b) of the backrest (2) and/or of the lower face (3b) of the seat part (3) being configured so as to deform, in the event of an impact sustained on the rear face (2b) of the backrest (2) and/or the lower face (3b) of the seat part (3), in the clearance space (E) without transmitting the impact, respectively in the front face (2a) of the backrest (2) and/or the upper face (3a) of the seat part (3),
**characterised in that** the rear face (2b) of the backrest (2) and/or the lower face (3b) of the seat part (3) comprising said at least one area (4) that is deformable comprises a braided and/or woven and/or knitted fabric (11) with uniform braiding and/or weaving and/or knitting, said at least one area (4) that is deformable being obtained through a geometrical configuration that is different from the fixed structure (12) of the seat (1) in relation to the geometrical configuration of the deformable area (30) before it is fastened onto the fixed structure (12).

2. Seat according to claim 1, **characterised in that** said at least one area (4) that is deformable is configured in order to be deformed, in the event of an impact sustained on the rear face (2b) of the backrest (2) and/or the lower face (3b) of the seat part (3), in the clearance space (E) without entering into contact respectively of the front face (2a) of the backrest (2) and/or the upper face (3a) of the seat part (3).

3. Seat according to claim 1 or 2, **characterised in that** the rear face (2b) of the backrest (2) and/or the lower face (3b) of the seat part (3) comprising said at least one area (4) that is deformable comprises a braided and/or woven and/or knitted fabric (11) having at least two areas (13a, 13b) that have different penetration resistances.

4. Seat as claimed in any preceding claim, **characterised in that** said at least one area (4) that is deformable extends over at least one recess of the fixed structure (12) of the seat (1), in particular a recess made in a shell (41) of the fixed structure (12), with the thickness of the fixed structure (12) defining the clearance space (E), with the fixed structure (2), in particular the shell (41) being made of a rigid material, in particular of composite and/or plastic and/or of metal.

5. Seat as claimed in any preceding claim, **characterised in that** the rear face (2b) of the backrest (2) and/or the lower face (3b) of the seat part (3) comprising said at least one area (4) that is deformable is fastened to the fixed structure (12) of the seat (1) by means of at least one reversible hook, in particular a press-button, a zipper, a Velcro fastener, a screwing and/or a bolting.

6. Seat according to any of claims 1 to 4, **characterised in that** the rear face (2b) of the backrest (2) and/or the lower face (3b) of the seat part (3) comprising said at least one area (4) that is deformable is fastened to the fixed structure (12) of the seat (1) by means of at least one irreversible hook, in particular by gluing, welding, sewing and/or riveting.

7. Seat as claimed in any preceding claim, **characterised in that** the clearance space (E) is empty.

8. Seat according to any of claims 1 to 6, **characterised in that** the clearance space (E) is filled with an elastically deformable material, in particular a foam.

9. Set of at least two adjacent vehicle seats (1), **characterised in that** it comprises at least two adjacent seats (1) as claimed in any preceding claim, and **in that** at least one same deformable area (4) is common to said at least two seats (1), extending in particular on the rear faces of the backrests of the at least two seats (1) and/or on the lower faces of the seat parts of said at least two seats (1).

10. Vehicle comprising a seat (1) according to any of claims 1 to 8 or a set (10) of at least two vehicle seats (1) according to claim 10.

11. Vehicle according to claim 10, **characterised in that** the rear face (2b) of the backrest (2) and/or the lower face (3b) of the seat part (3) comprising said at least one area (4) that is deformable is fastened to a fixed structure (12) of at least one seat (1).

12. Vehicle according to claim 10, **characterised in that** the rear face (2b) of the backrest (2) and/or the lower face (3b) of the seat part (3) comprising said at least one area (4) that is deformable is fastened to a fixed structure of the compartment of the vehicle.

13. Method for manufacturing a vehicle seat (1) according to any of claims 1 to 8, wherein a braided and/or woven and/or knitted fabric (11) is assembled, intended to form at least partially the rear face (2b) of the backrest (2) and/or the lower face (3b) of the seat part (3) comprising said at least one area (4) that is deformable, on a fixed structure (12) of the seat (1).
